# NEW EUROPEAN PATENT SPECIFICATION

(11) **EP 1 831 102 B2**
(45) Date of publication and mention of the opposition decision: **02.09.2015**
(45) Mention of the grant of the patent: 11.05.2011
(21) Application number: 05802492.8
(22) Date of filing: 10.11.2005
(51) Int. Cl.: C01B 11/02, C01D 5/02

(54) **CHEMICAL PROCESS AND APPARATUS**
CHEMISCHES VERFAHREN UND VORRICHTUNG
PROCESSUS CHIMIQUE ET APPAREIL

(30) Priority: 06.12.2004 EP 04106306
(43) Date of publication of application: 12.09.2007
(73) Proprietor: Akzo Nobel N.V., 6800 SB Arnhem (NL); Eka Chemicals AB, 445 80 Bohus (SE)
(72) Inventor: SIMIC, Nina, S-423 61 Torslanda (SE); PELIN, Kalle, S-442 53 Ytterby (SE)
(74) Representative: De Vries, Adriaan Jacobus
(86) International application number: PCT/SE2005/001693
(87) International publication number: WO 2006/062455

(56) References cited:
- EP-A- 0 366 636
- US-A- 3 816 077
- US-A- 4 421 730
- US-A- 4 770 868
- US-A- 5 091 166
- US-A- 5 091 167
- US-A- 5 399 332
- US-A- 5 399 332
- US-A- 5 851 374
- US-A- 5 858 322
- Tappi Conference
- Declaration Mr. Nearpass

## Description

The present invention relates to a process and an apparatus for the production of chlorine dioxide from alkali metal chlorate, sulfuric acid and hydrogen peroxide.

Chlorine dioxide used in aqueous solution is of considerable commercial interest, mainly in pulp bleaching, but also in water purification, fat bleaching, removal of phenols from industrial wastes etc. It is therefore desirable to provide processes in which chlorine dioxide can be efficiently produced.

There are numerous different processes for chlorine dioxide production. Most large scale processes in commercial use involve continuous reaction of alkali metal chlorate in an acidic reaction medium with a reducing agent such as hydrogen peroxide, methanol, chloride ions or sulfur dioxide to form chlorine dioxide that is withdrawn as a gas from the reaction medium. Generally, the acidity is mainly provided by addition of sulfuric acid and the sulfate is withdrawn as a by-product in the form of solid alkali metal sulfate or dissolved in depleted reaction medium.

In one kind of processes the reaction medium is maintained in a single reaction vessel under boiling conditions at subatmospheric pressure, wherein alkali metal salt of the acid is precipitated and withdrawn as a salt cake. A particularly efficient reducing agent is hydrogen peroxide, as described in e.g. G. Charles et al, Pima's Papermaker, Jan. 1998, p. 74-75, "Generate more chlorine dioxide, less BOD using hydrogen peroxide" and US patents 5091166 and 5091167. However, it has been found difficult to maintain stochiometric consumption of hydrogen peroxide during long term operation in full scale.

US patent 5366714 deals with that problem and discloses a process in which the hydrogen peroxide is fed pre-mixed with alkali metal chlorate and sulfuric acid.

US patent 4421730 discloses a process in which alkali metal chlorate is reduced by chloride ion in the presence of hydrogen peroxide and a complex catalyst of palladium (II) with chloride ion.

It has now been found that hydrogen peroxide and sulfuric acid in the reaction medium may react to form Caro's acid, H₂SO₅. Caro's acid is a very strong oxidant and the conditions in a production process for chlorine dioxide may favour unwanted side reactions leading to a loss of hydrogen peroxide, such as reaction of Caro's acid with hydrogen peroxide to form sulfuric acid and oxygen or with chloride to form chlorine.

Even if the reaction medium in a chlorine dioxide plant normally is well mixed, there are always concentration gradients around the feed inlets with zones where the local concentrations of the respective feed chemicals are higher than in the reaction medium as a whole. According to the present invention, hydrogen peroxide and sulfuric acid should be fed in a way to minimise the risk that the zones with high concentrations thereof coincide.

An aspect of the present invention thus concerns a process for the production of chlorine dioxide in an apparatus comprising a reaction vessel holding a reaction medium and a circulation conduit leading through a heater for the reaction medium, said process comprising the steps of continuously:
a) maintaining the reaction medium at subatmospheric pressure and a temperature sufficient for evaporating water;
b) circulating reaction medium through the circulation conduit and the heater,
c) reacting alkali metal chlorate, sulfuric acid and hydrogen peroxide in the reaction medium to form chlorine dioxide, oxygen and alkali metal sulfate;
d) feeding alkali metal chlorate, sulfuric acid and hydrogen peroxide to the reaction medium, wherein the sulfuric acid is fed through an inlet into the circulation conduit down-stream the heater and the hydrogen peroxide is fed through an inlet directly into the reaction vessel or through an inlet into the circulation conduit down-streams the inlet for sulfuric acid at a distance in the flow direction therefrom of at least about the inner diameter of the circulation conduit; and,
e) withdrawing a gas comprising chlorine dioxide, oxygen and evaporated water.

The pressure and the temperature are set so to evaporate water to dilute the chlorine dioxide formed and withdrawn from the reaction medium. Preferably the reaction medium is maintained at a temperature about 15 to about 100°C, most preferably from about 30 to about 85°C. Suitably the reaction medium is maintained at an absolute pressure from about 8 to about 80 kPa, preferably from about 8 to about 55 kPa, most preferably from about 10 to about 50 kPa. Preferably the reaction medium is maintained at its boiling point at the prevailing pressure.

As the evaporation of water from the reaction medium consumes more energy than generated in the process, this is balanced by supplying heat to the reaction medium circulating through the heater in the circulation conduit. Any kind of heater may be used, such as heat exchangers heated by steam or any other hot fluid medium.

The concentration of alkali metal chlorate maintained in the reaction medium may vary within wide limits, for example from about 0.25 moles/litre up to saturation, preferably from about 1.5 moles/litre up to saturation, most preferably from about 2.5 moles/litre up to saturation.

The acidity of the reaction medium is preferably maintained from about 0.5 to about 12 N, more preferably from about 1 to about 10 N, most preferably from about 1.5 to about 7 N.

In the process the hydrogen peroxide is fed through an inlet into the circulation conduit down-stream the inlet for sulfuric acid at a distance in the flow direction therefrom of at least about the inner diameter of the circulation conduit, preferably at least about twice, more preferably at least about five times, most preferably at least about ten times the inner diameter of the circulation conduit. An advantage of this embodiment is that more of the chlorine dioxide formation occurs in the circulation conduit, which facilitates the withdrawal thereof in the reaction vessel.

The inner diameter of the conduit depends on the capacity of the production plant and is preferably designed to ensure that the flow therein is turbulent. A suitable inner diameter may, for example, be from about 10 to about 100 cm, preferably from about 20 to about 60 cm. In the case the cross-section of the circulation conduit is not circular the diameter required for the same cross-section area in a conduit with circular cross-section is referred to.

By keeping the feed inlets for sulfuric acid and hydrogen peroxide at a long distance from each other the risk for formation of Caro's acid is decreased. However, the optimal positions of the feed inlets from a chemical point of view cannot always be achieved for practical reasons, particularly if an already existing plant is modified, but also a compromise with a reasonably low formation of Caro's acid is within the scope of the invention.

Preferably the amount of hydrogen peroxide fed is from about 0.5 to about 2 moles per mole alkali metal chlorate fed, most preferably from about 0.5 to about 1 mole per mole alkali metal chlorate fed, particularly most preferably from about 0.5 to about 0.6 moles per mole alkali metal chlorate fed.

The alkali metal chlorate, normally as a aqueous solution, may be fed anywhere directly into the reaction vessel or into the circulation conduit, for example up-stream or down-stream the heater or up-stream or down-stream the sulfuric acid inlet. It is also possible to feed the alkali metal chlorate as a pre-mixed solution with the hydrogen peroxide.

Any alkali metal chlorate may be used, such as chlorate of sodium, potassium or mixtures thereof. Normally sodium is preferred. It is also possible to feed a mixture of alkali metal chlorate and chloric acid, in which case the amount of sulfuric acid fed may be reduced.

The sulfuric acid is fed through an inlet down-stream the heater. The sulfuric acid fed preferably has a concentration from about 30 to about 98 wt%, most preferably from about 40 to about 70 wt%. Sulfuric acid of low concentration is easier to mix with the reaction medium, but a high concentration gives the advantage of utilisation of the heat of dilution.

It is preferred to operate the process under conditions to obtain precipitation of solid alkali metal sulfate in the reaction medium. Depending on the acidity of the reaction medium, substantially neutral sulfate or acidic sesquisulfate may form. However, it is also possible to operate the process under such conditions that no formation of solid alkali metal sulfate occurs.

At least some of the alkali metal sulfate formed is normally withdrawn, preferably as a solid salt cake which may be removed on a conventional filter, and may in some cases be used as a by-product. However, it is also possible to electrochemically acidify some of the alkali metal sulfate and recycle it to the reaction medium to replace some of the sulfuric acid feed. Such electrochemical acidification is described in e.g. US patents 4125484, 5478446, 5487881, 5858322 and 6322690.

Chlorine dioxide is withdrawn as a gas together with oxygen and evaporated water and may be absorbed into water in a conventional way. In most cases, the chlorine dioxide is finally used as an aqueous solution, for example in a pulp bleach tower.

Although not necessary, it is possible to feed small amounts of chloride ions, preferably in the form of alkali metal chloride, so as to maintain the concentration thereof in the reaction medium within the range from about 0.001 up to about 0.8 moles/litre. However, it is preferred not to feed any chloride in addition to the chloride always being present as an impurity of the alkali metal chlorate. Preferably the total amount of chloride ions fed, including impurities in the chlorate, is below about 1 mole %, more preferably below about 0.1 mole %, even more preferably below about 0.05 mole %, most preferably below about 0.02 mole % Cl⁻ of the ClO₃⁻.

A further aspect of the invention concerns an apparatus for the production of chlorine dioxide comprising a reaction vessel, a circulation conduit leading through a heater, feed inlets for alkali metal chlorate, sulfuric acid and hydrogen peroxide, wherein the feed inlet for sulfuric acid leads into the circulation conduit down-stream the heater and the feed inlet for hydrogen peroxide leads into the circulation conduit down-stream the feed inlet for sulfuric acid at a distance in the flow direction therefrom of at least about the inner diameter of the circulation conduit.

For suitable and preferred embodiments of the apparatus the above description of the process is referred to.

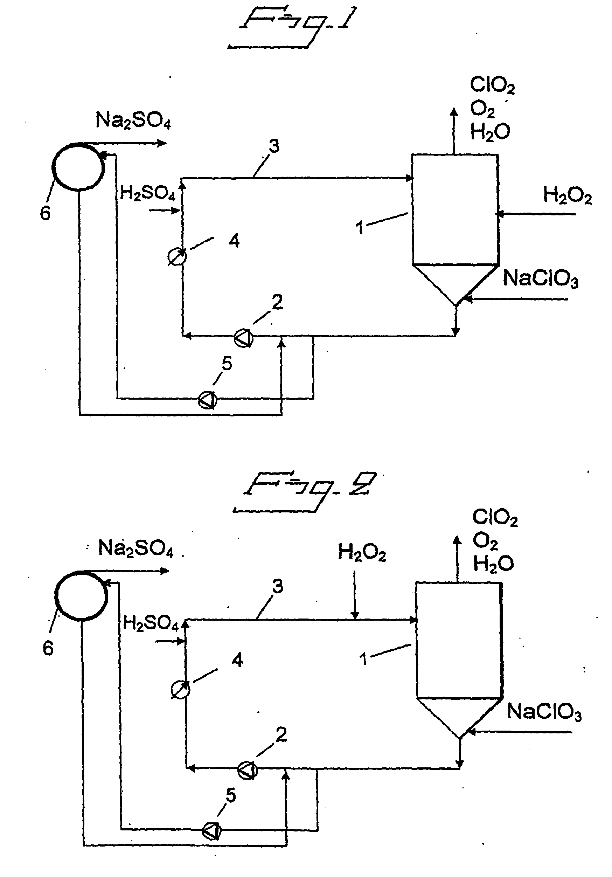

Referring to Fig. 1, an SVP^{®} process for the production of chlorine dioxide which is not according to the claimed invention is schematically shown. A reaction vessel 1 holds an reaction medium under subatmospheric pressure. The reaction medium is circulated by a pump 2 through a circulation conduit 3 and a heater 4 (commonly called "reboiler") and back to the reaction vessel 1 at a rate sufficient for keeping the temperature of the reaction medium at the boiling point. Hydrogen peroxide is fed into a substantially cylindrical portion of the reaction vessel 1, sodium chlorate into a substantial conical portion of the reaction vessel 1 and sulfuric acid into the circulation conduit 3 down-stream the heater 4. In the reaction medium sodium chlorate, hydrogen peroxide and sulfuric acid react to form chlorine dioxide, oxygen and sodium sulfate. Chlorine dioxide and oxygen are withdrawn as a gas together with evaporated water. Sodium sulfate precipitates as a substantially neutral or acidic salt, depending on the acidity of the reaction medium. By a pump 5 reaction medium is circulated through a filter 6 to separate and withdraw the solid sodium sulfate.

Fig.2 shows a process according to the invention which is similar to Fig.1, with the only exception that the hydrogen peroxide is fed into the circulation conduit down-stream the feed point for sulfuric acid. The distance in the flow direction between the two feed points should be as long as practically possible and a least about the inner diameter of the conduit 3.

## Claims

1. Process for the production of chlorine dioxide in an apparatus comprising a reaction vessel holding a reaction medium and a circulation conduit leading through a heater for the reaction medium, said process comprising the steps of continuously:
a) maintaining the reaction medium at subatmospheric pressure and a temperature sufficient for evaporating water;
b) circulating reaction medium through the circulation conduit and the heater;
c) reacting alkali metal chlorate, sulfuric acid and hydrogen peroxide in the reaction medium to form chlorine dioxide, oxygen and alkali metal sulfate;
d) feeding alkali metal chlorate, sulfuric acid and hydrogen peroxide to the reaction medium, wherein the sulfuric acid is fed through an inlet into the circulation conduit down-stream the heater and the hydrogen peroxide is fed through an inlet into the circulation conduit down-stream the inlet for sulfuric acid at a distance in the flow direction therefrom of a least about the inner diameter of the circulation conduit; and
e) withdrawing a gas comprising chlorine dioxide, oxygen and evaporated water.

2. Process as claimed in claim 1, wherein the hydrogen peroxide is fed through an inlet into the circulation conduit down-stream the inlet for sulfuric acid at a distance in the flow direction therefrom of at least about five times the inner diameter of the circulation conduit.

3. Process as claimed in any one of the claims 1 or 2, wherein at least some of the alkali metal sulfate formed is withdrawn as a solid salt cake.

4. Process as claimed in any one of the preceding claims, wherein the sulfuric acid feed has a concentration from about 30 to about 98 wt%.

5. Process as claimed in claim 4, wherein the sulfuric acid feed has concentration from about 40 to about 70 wt %.

6. Apparatus for the production of chlorine dioxide comprising a reaction vessel, a circulation conduit leading through a heater, feed inlets for alkali metal chlorate, sulfuric acid and hydrogen peroxide, wherein the feed inlet for sulfuric acid leads into the circulation conduit down-stream the heater and the feed inlet for hydrogen peroxide leads into the circulation conduit down-stream the feed inlet for sulfuric acid at a distance in the flow direction therefrom of at least about the inner diameter of the circulation conduit.

## Patentansprüche

1. Verfahren zur Herstellung von Chlordioxid in einer Vorrichtung umfassend ein Reaktionsgefäß das ein Reaktionsmedium beinhaltet und eine Zirkulationsrohrleitung, die durch eine Heizvorrichtung für das Reaktionsmedium führt, wobei das Verfahren die Schritte des kontinuierlichen:
(a) Haltens des Reaktionsmediums bei Unterdruck und einer Temperatur, die zum Verdampfen von Wasser ausreicht;
(b) Zirkulierens des Reaktionsmediums durch die Zirkulationsrohrleitung und die Heizvorrichtung;
(c) Umsetzens von Alkalimetallchlorat, Schwefelsäure und Wasserstoffperoxid in dem Reaktionsmedium, um Chlordioxid, Sauerstoff und Alkalimetallsulfat zu bilden;
(d) Zuführens von Alkalimetallchlorat, Schwefelsäure und Wasserstoffperoxid zu dem Reaktionsmedium, wobei die Schwefelsäure der Zirkulationsrohrleitung durch einen Einlass zugeführt wird und das Wasserstoffperoxid der Zirkulationsrohrleitung durch einen Einlass stromabwärts von dem Einlass für Schwefelsäure in einem Abstand in deren Strömungsrichtung von mindestens etwa dem Innendurchmesser der Zirkulationsrohrleitung zugeführt wird; und
(e) Abziehens eines Chlordioxid, Sauerstoff und verdampftes Wasser umfassenden Gases umfasst.

2. Verfahren nach Anspruch 1, wobei das Wasserstoffperoxid der Zirkulationsrohrleitung durch einen Einlass stromabwärts von dem Einlass für Schwefelsäure in einem Abstand in deren Strömungsrichtung von mindestens etwa dem Fünffachen des Innendurchmessers der Zirkulationsrohrleitung zugeführt wird.

3. Verfahren nach einem der Ansprüche 1 oder 2, wobei mindestens ein Teil des gebildeten Alkalimetallsulfats als fester Salzkuchen abgezogen wird.

4. Verfahren nach einem der vorhergehenden Ansprüche, wobei die Schwefelsäurebeschickung eine Konzentration von etwa 30 bis etwa 98 Gew.-% aufweist.

5. Verfahren nach einem der vorhergehenden Ansprüche, wobei die Schwefelsäurebeschickung eine Konzentration von etwa 40 bis etwa 70 Gew.-% aufweist.

6. Vorrichtung zur Herstellung von Chlordioxid, umfassend ein Reaktionsgefäß, eine durch eine Heizvorrichtung führende Zirkulationsrohrleitung, Einlassöffnungen für Alkalimetallchlorat, Schwefelsäure und Wasserstoffperoxid, wobei die Einlassöffnung für Schwefelsäure in die Zirkulationsrohrleitung führt und die Einlassöffnung für Wasserstoffperoxid stromabwärts von der Einlassöffnung für Schwefelsäure in einem Abstand in deren Strömungsrichtung von mindestens etwa dem Innendurchmesser der Zirkulationsrohrleitung in die Zirkulationsrohrleitung führt.

## Revendications

1. Procédé pour la production de dioxyde de chlore dans un dispositif comprenant un récipient réactionnel contenant un milieu réactionnel et une conduite de circulation conduisant à travers un réchauffeur pour le milieu réactionnel, ledit procédé comprenant les étapes consistant, en continu :
(a) à maintenir le milieu réactionnel sous une pression sous-atmosphérique et à une température suffisante pour évaporer l'eau ;
(b) à faire circuler le milieu réactionnel à travers la conduite de circulation et le réchauffeur ;
(c) à faire réagir un chlorate de métal alcalin, de l'acide sulfurique et du peroxyde d'hydrogène dans le milieu réactionnel pour former du dioxyde de chlore, de l'oxygène et un sulfate de métal alcalin ;
(d) à introduire du chlorate de métal alcalin, de l'acide sulfurique et du peroxyde d'hydrogène dans le milieu réactionnel, l'acide sulfurique étant introduit par l'intermédiaire d'une entrée dans la conduite de circulation et le peroxyde d'hydrogène étant introduit par l'intermédiaire d'une entrée dans la conduite de circulation en aval de l'entrée pour l'acide sulfurique à une distance de la direction d'écoulement de celui-ci d'au moins environ le diamètre intérieur de la conduite de circulation ; et
(e) à soutirer un gaz comprenant du dioxyde de chlore, de l'oxygène et de la vapeur d'eau.

2. Procédé selon la revendication 1, dans lequel le peroxyde d'hydrogène est introduit par l'intermédiaire d'une entrée dans la conduite de circulation en aval de l'entrée pour l'acide sulfurique à une distance dans la direction d'écoulement de celui-ci d'au moins environ cinq fois le diamètre intérieur de la conduite de circulation.

3. Procédé selon l'une quelconque des revendications 1 à 2, dans lequel au moins une partie du sulfate de métal alcalin formé est soutirée sous la forme d'un gâteau de sel solide.

4. Procédé selon l'une quelconque des revendications précédentes, dans lequel la charge d'acide sulfurique a une concentration d'environ 30 à environ 98 % en poids.

5. Procédé selon l'une quelconque des revendications précédentes , dans lequel la charge d'acide sulfurique a une concentration d'environ 40 à environ 70 % en poids.

6. Dispositif pour la production de dioxyde de chlore comprenant un récipient réactionnel, une conduite de circulation conduisant à travers un réchauffeur, des entrées d'introduction de chlorate de métal alcalin, d'acide sulfurique et de peroxyde d'hydrogène, dans lequel l'entrée d'introduction de l'acide sulfurique donne dans la conduite de circulation et l'entrée d'introduction du peroxyde d'hydrogène donne dans la conduite de circulation en aval de l'entrée d'introduction de l'acide sulfurique à une distance dans la direction d'écoulement de celui-ci d'au moins environ le diamètre intérieur de la conduite de circulation.
